# EUROPEAN PATENT APPLICATION

(11) **EP 4 790 260 A1**
(43) Date of publication of application: **12.08.2026**
(21) Application number: 24882412.0
(22) Date of filing: 23.10.2024
(51) Int. Cl.: F04C 18/02, F04C 27/00, F16J 15/24

(54) **SCROLL FLUID MACHINE**

(30) Priority: 26.10.2023 JP 2023183830
(71) Applicant: ANEST IWATA Corporation, Yokohama-shi, Kanagawa 223-8501 (JP)
(72) Inventor: OCHIAI Tetsunari, Yokohama-shi, Kanagawa 223-8501 (JP); SHIMIZU Yuki, Yokohama-shi, Kanagawa 223-8501 (JP)
(74) Representative: Vossius & Partner Patentanwälte Rechtsanwälte mbB
(86) International application number: PCT/JP2024/037727
(87) International publication number: WO 2025/089301

(57) **Abstract**

A scroll fluid machine includes a fixed scroll and an orbiting scroll that has an orbiting main surface and orbits relative to the fixed scroll. The fixed scroll includes a sealing structure that is provided in a section facing the orbiting main surface. The sealing structure has a sealing groove that is formed in a fixed main surface and has a groove bottom surface, a backup unit that is in contact with the groove bottom surface, and a dust seal that is in contact with each of the backup unit and the orbiting main surface and is pressed against the orbiting main surface by a force received from the backup unit. The backup unit includes a lower backup tube that is in contact with the groove bottom surface and an upper backup tube that is disposed in series with the lower backup tube in a direction of a groove depth of the sealing groove and is in contact with the dust seal.

## Description

### Technical Field

The present invention relates to a scroll fluid machine.

### Background Art

A scroll fluid machine includes a pair of scrolls that are disposed opposite each other. Each of the pair of scrolls includes a wrap having a spiral shape. The scroll fluid machine compresses or expands gas by changing a volume of an internal space formed between the wrap included in one scroll and the wrap included in the other scroll. The change in the volume of the internal space is achieved by the one scroll orbiting relative to the other scroll.

When pressure in the internal space is compared with atmospheric pressure of a surrounding environment, the pressure in the internal space is higher than the atmospheric pressure of the surrounding environment in some cases, or the pressure in the internal space is lower than the atmospheric pressure of the surrounding environment in other cases. Resulting from this difference in pressure, gas confined in the internal space may leak. In addition, resulting from this difference in pressure, foreign matter may intrude into the internal space. To address the foregoing, a sealing structure for separating the internal space from the external space is provided in a section where the pair of scrolls are in contact with each other. Patent Literature 1 discloses a scroll fluid machine including a dust seal for preventing intrusion of dust and the like from the outside.

### Citation List

### Patent Literature

Patent Literature 1: Japanese Unexamined Patent Publication No. 2005-320885

### Summary of Invention

### Technical Problem

The sealing structure is provided on one of the scrolls. One of the scrolls orbits relative to the other scroll. Thus, the other scroll slides against the sealing structure provided on the one scroll. This sliding causes wear of parts constituting the sealing structure. That is, the parts constituting the sealing structure are consumables, and replacement at a predetermined timing is required. When the part replacement is performed, since operation of the scroll fluid machine has to stop, the longer the time interval until the next part replacement timing is, the better. Thus, in this technical field, there has been demand for service life extension of the sealing structure.

The present invention provides a scroll fluid machine capable of achieving service life extension of a sealing structure.

### Solution to Problem

A scroll fluid machine that is one mode of the present invention includes one scroll provided with a wrap that has a spiral shape, and another scroll having an other-side main surface on which the one scroll is slidable and configured to orbit relative to the one scroll. The one scroll includes a sealing structure that is provided in a section facing the other-side main surface, and the sealing structure has a sealing groove that is formed in the section facing the other-side main surface and has a groove bottom surface, an elastic member that is disposed on a side of the groove bottom surface, and a sealing member that is disposed between the elastic member and the other-side main surface and is pressed against the other-side main surface by a force received from the elastic member. The elastic member includes a first spring element that is disposed on the side of the groove bottom surface and a second spring element that is disposed in series with the first spring element in a direction of a groove depth of the sealing groove and is disposed on a side of the sealing member.

In the scroll fluid machine, the sealing member is pressed against the orbiting main surface by the elastic member. The elastic member is configured with the first spring element and the second spring element that are treated as mechanical elements different from each other. With the configuration in which the first spring element and the second spring element are disposed in series, it can be regarded as a mechanical model in which the springs are connected in series. Thus, the equivalent spring constant of the elastic member is smaller than a spring constant of an elastic member configured with one spring element. In accordance with Hooke's law, an elastic force is a product of a spring constant and a distance, and thus, in a case of obtaining a predetermined elastic force, decrease in the spring constant results in the need to increase the distance accordingly. In this respect, in the configuration in which the sealing member is pressed against the other-side main surface by a predetermined pressing force, since the spring constant of the elastic member is decreased, an amount of deformation of the elastic member is increased in order to obtain the predetermined pressing force. The amount of deformation of the elastic member is related to a length of time during which generation of the pressing force can be maintained. Thus, increasing the amount of deformation can lengthen the time during which the generation of the pressing force can be maintained. As a result, the sealing structure can achieve service life extension.

The first spring element of the scroll fluid machine that is the one mode may be a first tube having an annular-ring-shaped cross-section and having a diameter defined by a groove width of the sealing groove. The second spring element may be a second tube having an annular-ring-shaped cross-section and having a diameter defined by the groove width of the sealing groove. With this structure, the elastic member can be formed by tube members having good availability.

In the scroll fluid machine that is the one mode, a distance from the groove bottom surface of the sealing groove to the other-side main surface may be smaller than a total length obtained by adding the diameter that is a natural length of the first tube, the diameter that is a natural length of the second tube, and a length of the sealing member in the direction of the groove depth. With this configuration, when the one scroll and the other scroll are combined, the respective diameters of the first tube and the second tube can be made smaller than the natural lengths. Thus, the first tube and the second tube are reliably deformed, so that the pressing force for pressing the sealing member against the other-side main surface can be reliably generated.

In the scroll fluid machine that is the one mode, the groove depth (GD) of the sealing groove may be defined by Formula (1) below including the diameter (D1) of the first tube, the diameter (D2) of the second tube, the length (ST) of the sealing member in the direction of the groove depth, an allowable wear amount (SW) of the sealing member, and a length of a gap (AC) from the section facing the other-side main surface to the other-side main surface. With this configuration, since the groove depth (GD) of the sealing groove is defined by Formula (1) below, a desired amount of wear can be achieved. $GD = \left(D1+D2\right) + \left(ST-SW\right) - AC$

In the scroll fluid machine that is the one mode, the diameter that is the natural length of the first tube and the diameter that is the natural length of the second tube may be smaller than the groove width of the sealing groove. With this configuration, a spring constant that is constant with respect to the degrees of deformation of the first tube and the second tube can be secured.

In the scroll fluid machine that is the one mode, when the length of the gap from the section facing the other-side main surface to the other-side main surface is a predetermined length (AC), the first tube and the second tube may be compressed in the direction of the groove depth of the sealing groove and deformed so as to be extended in a width direction of the sealing groove. The first tube and the second tube that are extended in the width direction of the sealing groove may not be in contact with groove side surfaces of the sealing groove. With this configuration as well, a spring constant that is constant with respect to the degrees of deformation of the first tube and the second tube can be secured.

The first tube of the scroll fluid machine that is the one mode may be in separably contact with the second tube. With this configuration, the sealing structure can be formed using readily available tubes.

The first tube of the scroll fluid machine that is the one mode may be joined to the second tube so as to be inseparable from the second tube. With this configuration, it is possible to reliably form the elastic member in which the first tube that is the first spring element and the second tube that is the second spring element are coupled in series.

The elastic member of the scroll fluid machine that is the one mode may be in direct contact with the groove bottom surface.

The sealing member of the scroll fluid machine that is the one mode may be in direct contact with the elastic member and may also be in direct contact with the other-side main surface.

The first spring element of the scroll fluid machine that is the one mode may be in direct contact with the groove bottom surface.

The second spring element of the scroll fluid machine that is the one mode may be in direct contact with the sealing member.

### Advantageous Effects of Invention

According to the present invention, a scroll fluid machine capable of achieving the service life extension of the sealing structure is provided.

### Brief Description of Drawings

FIG. 1 is an exploded perspective view illustrating a structure of a scroll fluid machine of an embodiment.
FIG. 2 is a sectional view illustrating a principal part of the scroll fluid machine illustrated in FIG. 1.
FIG. 3 is a sectional view illustrating a sealing structure included in the scroll fluid machine illustrated in FIG. 2.
FIGS. 4(a), 4(b), and 4(c) are diagrams for explaining a first operation of the scroll fluid machine according to the embodiment.
FIGS. 5(a), 5(b), and 5(c) are diagrams for explaining a second operation of the scroll fluid machine according to the embodiment.
FIGS. 6(a), 6(b), and 6(c) are diagrams for explaining an operation of a scroll fluid machine according to a comparative example.

### Description of Embodiments

Hereinafter, a mode for carrying out the present invention will be described in detail with reference to the accompanying drawings. In the description of the drawings, the same elements are denoted by the same reference signs, and redundant description will be omitted.

### [Scroll Fluid Machine]

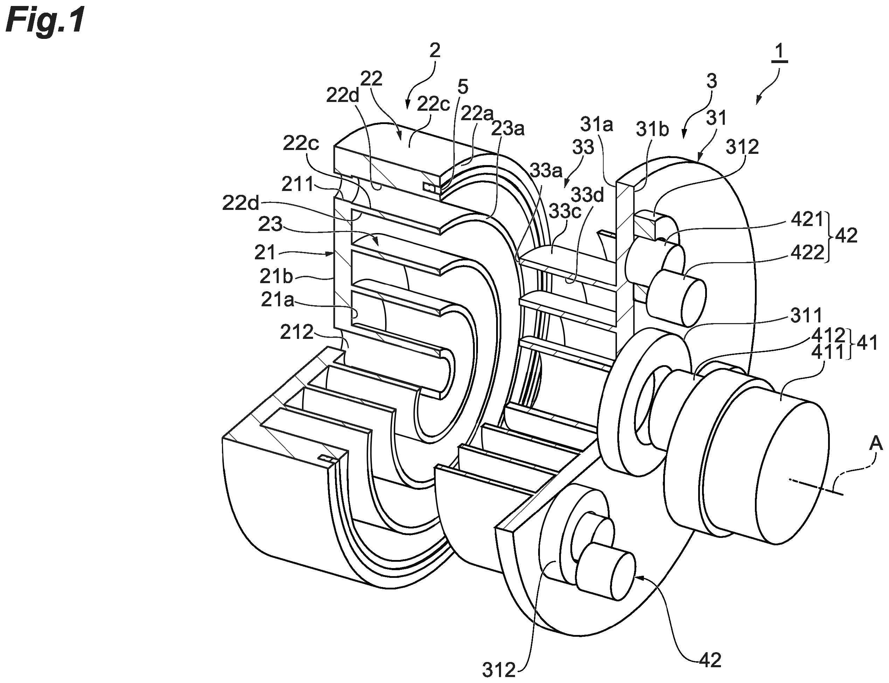

A scroll fluid machine 1 illustrated in FIG. 1 includes a pair of scrolls as main components. In the scroll fluid machine 1, a plurality of partitioned spaces are formed by the pair of scrolls. Each of the plurality of spaces decreases or increases in volume due to relative orbiting motion of the pair of scrolls. As a result, gas confined in the partitioned spaces is compressed or expanded. That is, the scroll fluid machine 1 is a scroll compressor or a scroll expander. In the following description, the scroll fluid machine 1 will be described as a compressor. Each of the plurality of spaces partitioned by the pair of scrolls is referred to as a pocket.

In the present embodiment, the scroll fluid machine 1 includes a fixed scroll 2 serving as one scroll of the pair of scrolls and an orbiting scroll 3 serving as the other scroll. The one scroll has a fixed main surface 21a serving as a one-side main surface that faces the other scroll. In the present embodiment, the one scroll is the fixed scroll 2, and the other scroll is the orbiting scroll 3. The orbiting scroll 3 that is the other scroll has an orbiting main surface 31a serving as the other-side main surface that faces the fixed scroll 2 being the one scroll. The scroll fluid machine 1 includes parts, such as a housing and a bearing; however, illustration in FIG. 1 and detailed description in the present embodiment are omitted.

The fixed scroll 2 is a member that is fixed to the housing or the like. An outer shape of the fixed scroll 2 is a cylindrical shape having a bottom. The fixed scroll 2 includes a fixed-side bottom portion 21, a fixed-side peripheral wall portion 22, and a fixed wrap 23.

The fixed-side bottom portion 21 is one of the members that form the pockets. The fixed-side bottom portion 21 has the fixed main surface 21a and a fixed-side back surface 21b. The fixed-side bottom portion 21 is provided with a suction port 211 for taking in gas and a discharge port 212 for discharging compressed gas. In the fixed-side bottom portion 21 having a disk shape, the suction port 211 is provided on an outer peripheral side near the fixed-side peripheral wall portion 22. In the disk-shaped fixed-side bottom portion 21, the discharge port 212 is provided in a central portion. The fixed main surface 21a faces the orbiting scroll 3. A part of the orbiting scroll 3 faces the fixed main surface 21a subjected to mirror finish.

The fixed-side peripheral wall portion 22 forms an outer peripheral wall of the fixed scroll 2. As with the fixed main surface 21a, the fixed-side peripheral wall portion 22 is also one of the members that form the pockets. A plurality of the pockets are formed in regions surrounded by the fixed-side peripheral wall portion 22. The fixed-side peripheral wall portion 22 has a fixed-side peripheral-wall main surface 22a, a peripheral-wall outer peripheral surface 22c, and a peripheral-wall inner peripheral surface 22d. The fixed-side peripheral-wall main surface 22a is a section that faces the orbiting main surface. The fixed-side peripheral-wall main surface 22a faces the orbiting scroll 3. As with the fixed main surface 21a, a part of the orbiting scroll 3 also faces the fixed-side peripheral-wall main surface 22a.

When viewed in the direction of the rotation axis A, the fixed wrap 23 assumes what is called a spiral shape. The fixed wrap 23 and an orbiting wrap 33 (described later) form the plurality of pockets. In a case where the scroll fluid machine 1 is a compressor, the pockets move from the outer peripheral side to the inner peripheral side while orbiting about the rotation axis A according to the orbiting motion of the orbiting scroll 3. The volumes of the pockets decrease as the pockets move toward the inner peripheral side. The pockets eventually lead to the discharge port 212. As a result, the compressed gas is discharged from the discharge port 212. The fixed wrap 23 has a fixed-wrap main surface 23a, a fixed-wrap outer peripheral surface 23c, and a fixed-wrap inner peripheral surface 23d. The fixed-wrap main surface 23a faces the orbiting scroll 3.

The scroll fluid machine 1 includes one drive shaft 41 and three driven shafts 42. The drive shaft 41 includes a drive shaft body 411 and an eccentric coupling end portion 412. The eccentric coupling end portion 412 is provided at a tip end of the drive shaft body 411. A drive source, such as a motor, is coupled to a base end side of the drive shaft body 411 via a belt or the like. When the drive shaft 41 rotates, the eccentric coupling end portion 412 orbits about the rotation axis A of the drive shaft 41. Orbiting of the eccentric coupling end portion 412 causes the orbiting scroll 3 to perform the orbiting motion with respect to the fixed scroll 2. The driven shafts 42 support the orbiting motion of the orbiting scroll 3. The driven shafts 42 are disposed at equal intervals (120-degree intervals) around the rotation axis A of the drive shaft 41. The driven shafts 42 each include an orbiting-side coupling portion 421 that is coupled to the orbiting scroll 3, and a fixed-side coupling portion 422 that is coupled to a fixed member, such as the housing.

The orbiting scroll 3 includes an orbiting disk 31 and an orbiting wrap 33. The orbiting disk 31 has the orbiting main surface 31a that is the other-side main surface and an orbiting back surface 31b. The orbiting main surface 31a faces the fixed scroll 2. An outer peripheral side of the orbiting main surface 31a faces the fixed-side peripheral-wall main surface 22a of the fixed scroll 2. The orbiting wrap 33 is provided on an inner peripheral side of the orbiting main surface 31a. The orbiting back surface 31b is provided with a drive shaft receiving portion 311 to which the drive shaft 41 is coupled and driven shaft receiving portions 312 to which the driven shafts 42 are coupled.

As with the fixed wrap 23, the orbiting wrap 33 also has a spiral shape in plan view. The orbiting wrap 33 includes an orbiting-wrap main surface 33a, an orbiting-wrap outer peripheral surface 33c, and an orbiting-wrap inner peripheral surface 33d. The orbiting-wrap main surface 33a faces the fixed main surface 21a of the fixed scroll 2. A part of the orbiting-wrap inner peripheral surface 33d is in contact with a part of the fixed-wrap outer peripheral surface 23c. A part of the orbiting-wrap outer peripheral surface 33c is in contact with a part of the fixed-wrap inner peripheral surface 23d. These contact sections move from the outer peripheral side toward the center in a spiral shape about the rotation axis A according to the orbiting motion of the orbiting wrap 33. Each pair of the contact sections adjacent to each other delimits one pocket.

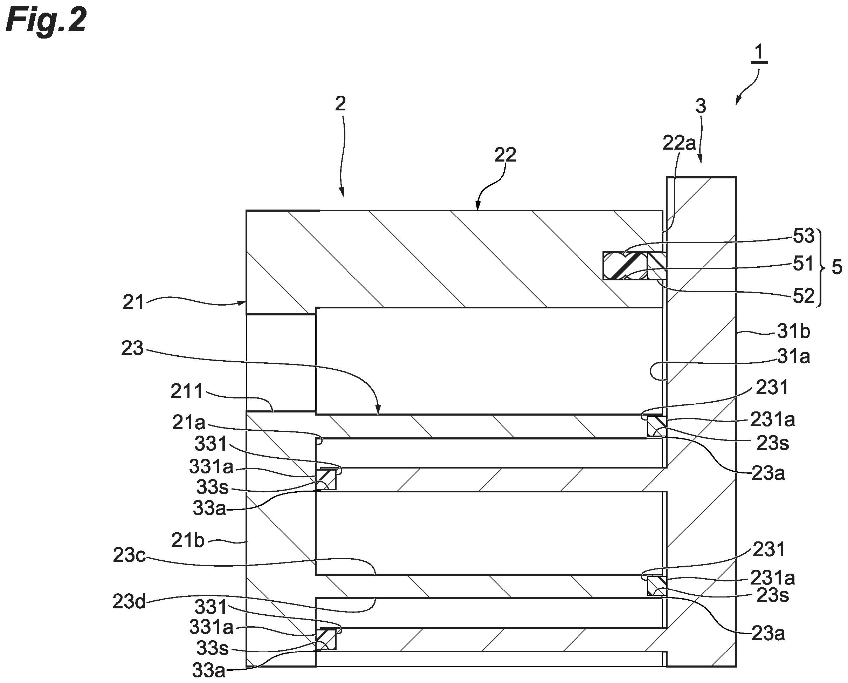

FIG. 2 illustrates a cross-section on the outer peripheral sides of the fixed scroll 2 and the orbiting scroll 3 in an enlarged manner. Sections where the fixed scroll 2 and the orbiting scroll 3 face each other will be described in detail with reference to FIG. 2.

As described above, each of the pockets moves while orbiting from the outer peripheral side toward the rotation axis A. Then, the volume of the pocket decreases as the pocket moves close to the rotation axis A from the outer peripheral side. The decrease in the volume of the pocket also diminishes the volume of the gas confined in the pocket. That is, the gas confined in the pocket is compressed. The fact that the gas confined in the pocket is compressed according to the decrease of the pocket means that the gas does not leak from the pocket when the volume of the pocket decreases. The orbiting scroll 3, on the other hand, performs the orbiting motion relative to the fixed scroll 2. That is, the sections where the fixed scroll 2 and the orbiting scroll 3 face each other are required to allow smooth sliding and to restrain gas leakage from the pocket or gas intrusion from the outside of the pocket into the pocket.

A first section where the fixed scroll 2 and the orbiting scroll 3 face each other is the fixed-wrap main surface 23a and the orbiting main surface 31a. A fixed seal 231 is disposed on the fixed-wrap main surface 23a. The fixed seal 231 is formed of, for example, a fluororesin having self-lubricant properties. The fixed seal 231 is fitted into a fixed-wrap groove 23s provided in the fixed-wrap main surface 23a. The fixed seal 231 slightly protrudes from the fixed-wrap main surface 23a. A fixed-seal main surface 231a is in contact with the orbiting main surface 31a. That is, the fixed-wrap main surface 23a is not in contact with the orbiting main surface 31a. A minute gap is formed between the fixed-wrap main surface 23a and the orbiting main surface 31a.

A second section where the fixed scroll 2 and the orbiting scroll 3 face each other is the orbiting-wrap main surface 33a and the fixed main surface 21a. As with the first section, slidability and airtightness are secured by an orbiting seal 331 fitted into an orbiting-wrap groove 33s. The orbiting-seal main surface 331a is in contact with the fixed main surface 21a. That is, the orbiting-wrap main surface 33a is not in contact with the fixed main surface 21a. A minute gap is formed between the orbiting-wrap main surface 33a and the fixed main surface 21a.

A third section where the fixed scroll 2 and the orbiting scroll 3 face each other is the fixed-side peripheral-wall main surface 22a and the orbiting main surface 31a. That is, the orbiting main surface 31a includes the section that faces the fixed-wrap main surface 23a and the section that faces the fixed-side peripheral-wall main surface 22a. All the regions of the fixed-side peripheral-wall main surface 22a face the orbiting scroll 3. On the other hand, in the orbiting main surface 31a, the section that faces the fixed-side peripheral-wall main surface 22a is a portion on the outer peripheral side surrounding the section that faces the fixed-wrap main surface 23a.

The fixed-side peripheral-wall main surface 22a is provided with a sealing structure 5. The sealing structure 5 secures slidability and airtightness similarly to the seals provided in the first section and the second section. The fixed-side peripheral wall portion 22 is one of the elements that form the pocket located on the outermost peripheral side among the plurality of pockets. For example, as illustrated in FIG. 2, the suction port 211 leads to the pocket, and gas is sucked into the pocket from the suction port 211. That is, when pressure outside the suction port 211 is compared with pressure in the pocket, the pressure in the pocket is lower than the pressure outside the suction port 211. In this respect, if there is an unintended gap between the fixed-side peripheral-wall main surface 22a and the orbiting main surface 31a, there is a possibility that foreign matter (dust) is sucked into the pocket resulting from the pressure difference. The sealing structure 5 also has a function of preventing such suction of dust.

The sealing structure 5 has a sealing groove 51, a dust seal 52 that is a sealing member, and a backup unit 53 that is an elastic member. As with the fixed seal 231 and the like, the dust seal 52 is formed of a fluororesin having self-lubricant properties. A shape of the dust seal 52 is an annular ring in plan view as viewed in the direction of the rotation axis A. A cross-sectional shape of the dust seal 52 is rectangular as an example. A dust-seal main surface 52a protrudes from the fixed-side peripheral-wall main surface 22a and is in contact with the orbiting main surface 31a.

The backup unit 53 applies, to the dust seal 52, a force pressing the dust seal 52 against the orbiting main surface 31a. The dust seal 52 gradually wears due to rubbing against the orbiting main surface 31a. When a position of the dust seal 52 with respect to the fixed-side peripheral wall portion 22 is fixed, a gap is likely to be generated between the dust seal 52 and the orbiting main surface 31a due to the wear. To address the foregoing, a state in which the dust seal 52 is in contact with the orbiting main surface 31a is maintained by a force of pressing the dust seal 52 toward the orbiting main surface 31a.

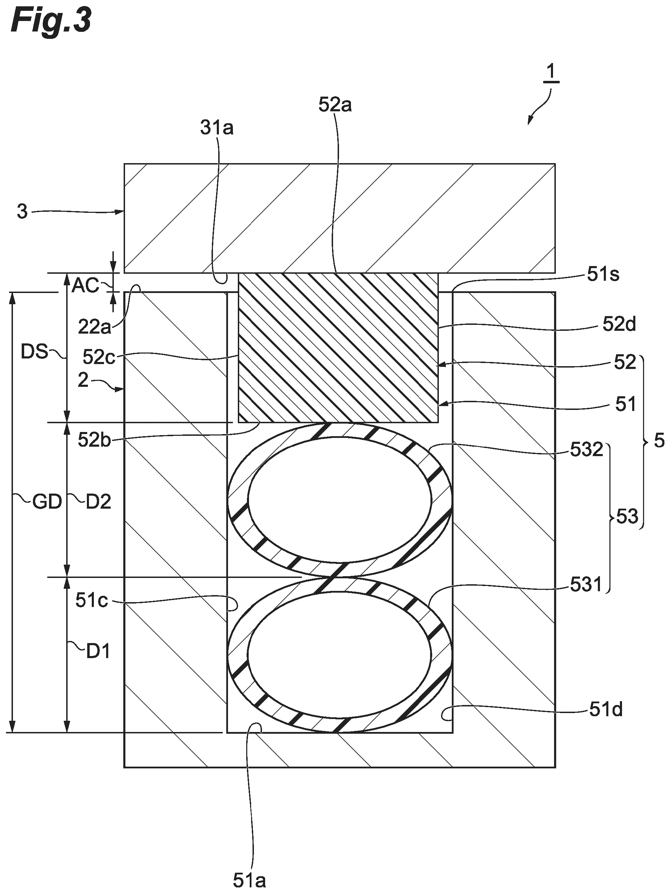

Further, a positional relation between the dust seal 52 and the backup unit 53 is as follows. First, as illustrated in FIG. 3, the dust seal 52 is disposed between the backup unit 53 and the orbiting main surface 31a. More specifically, the dust seal 52 is in direct contact with the backup unit 53, and is also in direct contact with the orbiting main surface 31a. Next, the backup unit 53 is disposed on a side of a groove bottom surface 51a. More specifically, the backup unit 53 is in direct contact with the groove bottom surface 51a.

Hereinafter, the sealing structure 5 will be described in more detail.

### [Structure of Sealing Structure]

FIG. 3 is a sectional view of the sealing structure 5 illustrated in an enlarged manner. The sealing groove 51 is a region surrounded by the groove bottom surface 51a, an outer-peripheral-side groove side surface 51c, and an inner-peripheral-side groove side surface 51d. The sealing groove 51 has a peripheral wall opening 51s formed in the fixed-side peripheral-wall main surface 22a. The shape of the sealing groove 51 is an annular ring in plan view. Thus, a shape of the groove bottom surface 51a is also an annular ring in plan view. In the illustrated example of FIG. 3, a width of the sealing groove 51 may be defined as, for example, a length from the outer-peripheral-side groove side surface 51c to the inner-peripheral-side groove side surface 51d. A groove depth GD of the sealing groove 51 is larger than the width of the sealing groove 51. The groove depth GD of the sealing groove 51 may be defined as, for example, a length from the fixed-side peripheral-wall main surface 22a to the groove bottom surface 51a.

A cross-sectional shape of the dust seal 52 is rectangular as described above. The dust seal 52 includes a dust-seal main surface 52a, a dust-seal back surface 52b, a dust-seal outer peripheral surface 52c, and a dust-seal inner peripheral surface 52d. The dust-seal main surface 52a is in contact with the orbiting main surface 31a. The dust-seal back surface 52b is in contact with an upper backup tube 532. The dust-seal outer peripheral surface 52c faces the outer-peripheral-side groove side surface 51c. The dust-seal outer peripheral surface 52c may or may not be in contact with the outer-peripheral-side groove side surface 51c. Similarly, the dust-seal inner peripheral surface 52d may or may not be in contact with the inner-peripheral-side groove side surface 51d. For example, when intrusion of foreign matter into the pocket from the outside is restrained, the dust seal 52 is pushed toward the inner peripheral side according to the pressure difference. As a result, the dust-seal outer peripheral surface 52c moves apart from the outer-peripheral-side groove side surface 51c. In this case, the dust-seal inner peripheral surface 52d may be in contact with the inner-peripheral-side groove side surface 51d.

The backup unit 53 is formed by stacking resin ring members each having a tube shape, for example. Specifically, the backup unit 53 includes a lower backup tube 531 in contact with the groove bottom surface 51a, and the upper backup tube 532 in contact with the lower backup tube 531 and the dust seal 52. The lower backup tube 531 is a first spring element or a first tube. The upper backup tube 532 is a second spring element or a second tube. The lower backup tube 531 may be fixed at a section in contact with the upper backup tube 532, or may simply be in contact with the upper backup tube 532.

The lower backup tube 531 and the upper backup tube 532 are stacked in the depth direction of the sealing groove 51. Each of the lower backup tube 531 and the upper backup tube 532 deforms so as to be compressed in the depth direction of the sealing groove 51. When the lower backup tube 531 and the upper backup tube 532 are simulated as virtual spring elements, respectively, the backup unit 53 can be expressed as a mechanical model in which a virtual spring that simulates the lower backup tube 531 and a virtual spring that simulates the upper backup tube 532 are connected in series. As a result, a spring constant of the backup unit 53 can be defined by Formula (3) (described later) using a spring constant of the lower backup tube 531 and a spring constant of the upper backup tube 532.

Shapes of the lower backup tube 531 and the upper backup tube 532 are not particularly restricted. As illustrated in FIG. 3 and the like, the lower backup tube 531 and the upper backup tube 532 are hollow tubes, and their cross-sectional shapes may each be an annular ring. In this case, a cross-sectional shape of the backup unit 53 configured with the lower backup tube 531 and the upper backup tube 532 is a figure-eight shape. In addition, the lower backup tube 531 and the upper backup tube 532 may be solid string-like members, and their cross-sectional shapes may each be a circle.

The backup unit 53 may or may not be in contact with the outer-peripheral-side groove side surface 51c and the inner-peripheral-side groove side surface 51d. For example, as illustrated in FIG. 3, when the backup unit 53 is in a state of generating a restoring force, the cross-sections of the lower backup tube 531 and the upper backup tube 532 may each have an elliptical shape, and sides thereof may each be in contact with the outer-peripheral-side groove side surface 51c and the inner-peripheral-side groove side surface 51d.

Dimensions of some of the elements described above may be set using Formula (2) below. $GD = \left(D1+D2\right) + \left(ST-SW\right) - AC$
GD: Groove depth
D1: Diameter of lower backup tube
D2: Diameter of upper backup tube
DS: Height of dust seal
SW: Allowable wear amount
AC: Set gap

### [Function of Sealing Structure]

The structure of the sealing structure 5 has been described so far. Hereinafter, the function of the sealing structure 5 will be described. First, the function of a sealing structure 5C that is a comparative example will be described. Thereafter, the function of the sealing structure 5 of the present embodiment will be described.

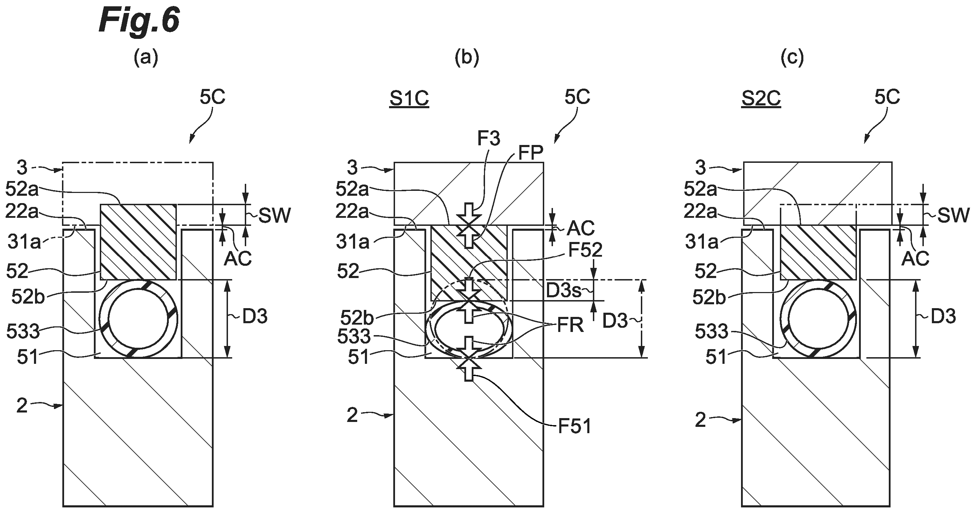

FIGS. 6(a), 6(b), and 6(c) are sectional views illustrating the sealing structure 5C that is the comparative example. The sealing structure 5C of the comparative example is different from the sealing structure 5 of the present embodiment in that one backup tube 533 is provided as a backup unit.

As illustrated in FIG. 6(a), the allowable wear amount SW can be defined as a distance from a dust-seal main surface 52a to a position separated upward from a fixed-side peripheral-wall main surface 22a by the set gap AC in a state in which the one backup tube 533 and a dust seal 52 are disposed in a sealing groove 51.

As illustrated in FIG. 6(b), the orbiting scroll 3 is brought close to the fixed scroll 2 in a state in which the orbiting main surface 31a is in contact with the dust-seal main surface 52a. At this time, the dust seal 52 does not substantially deform, and the backup tube 533 deforms along with the movement of the orbiting scroll 3. This movement continues until a distance from the orbiting main surface 31a to the fixed-side peripheral-wall main surface 22a reaches the set gap AC. The state illustrated in FIG. 6(b) can be said to be, for example, immediately after a scroll fluid machine 1 is assembled. That is, the scroll fluid machine 1 is in an initial state S1C before being operated.

At the time when the state illustrated in FIG. 6(b) is established, the backup tube 533 generates a tube reaction force FR corresponding to the deformation amount D3s. A magnitude of the tube reaction force FR can be defined as a product of a spring constant (kc) of the backup tube 533 and the deformation amount D3s. The backup tube 533 receives a reaction force F51 from the groove bottom surface 51a. The reaction force F51 has the same magnitude as that of the tube reaction force FR while their directions are opposite. Further, the backup tube 533 causes the tube reaction force FR to act on the dust-seal back surface 52b. The backup tube 533 also receives a reaction force F52 from the dust seal 52. The reaction force F52 of the dust seal 52 results in generating, between the dust seal 52 and the orbiting scroll 3, a pressing force FP and a reaction force F3 that are the same in magnitude and opposite in direction.

When the scroll fluid machine 1C starts operating from the initial state S1 of FIG. 6(b), a state in which the orbiting main surface 31a moves while rubbing against the dust-seal main surface 52a occurs. At this time, a frictional force is generated between the dust-seal main surface 52a and the orbiting main surface 31a, the frictional force being definable as a product of the pressing force FP that can be regarded as a normal force and a friction coefficient. The orbiting scroll 3 moves relative to the dust seal 52 against the frictional force. As a result, the dust seal 52 gradually wears. A degree of wear depends on the magnitude of the pressing force FP.

FIG. 6(c) illustrates a state in which an amount of wear of the dust seal 52 reaches the allowable wear amount. In the illustrated example of FIG. 6(c), the amount of wear of the dust seal 52 reaches the allowable wear amount SW, and the deformation amount D3s of the backup tube 533 is also zero. That is, neither the tube reaction force FR resulting from the deformation of the backup tube 533 is generated nor does the pressing force FP occur. Thus, the dust seal 52 is not in a state of being pressed against the orbiting main surface 31a with a predetermined magnitude of the pressing force FP. When such a state is reached, the sealing structure 5C loses the sealing function (seal function), and is thus determined as a state in which end of a service life is reached (end-of-service-life state S2). Then, replacement of the dust seal 52 is performed.

When the dust seal 52 is replaced, the scroll fluid machine 1 cannot operate as a matter of course. Thus, extending the service life of the dust seal 52 enables extension of time during which the scroll fluid machine 1 can continuously operate. In the scroll fluid machine 1 of the present embodiment, the service life of the sealing structure 5 is extended relative to that of the scroll fluid machine 1 of the comparative example, and as a result, the time during which the operation can continue is allowed to be extended.

The service life of the sealing structure 5 is a time period until the amount of wear of the dust seal 52 reaches the allowable wear amount SW. This is because when the amount of wear of the dust seal 52 reaches the allowable wear amount SW, the pressing force FP for pressing the dust seal 52 against the orbiting main surface 31a is not generated. The pressing force FP is generated when a total length (D3 + DS) of the sealing structure 5 in a natural state is longer than a total length (GD + AC) of the groove depth GD and the set gap AC. When there is the allowable wear amount SW set in the dust seal 52, the pressing force FP is generated. That is, if the allowable wear amount set for the dust seal 52 can be increased, the time for which the pressing force FP is generated can be extended accordingly. Thus, the service life of the sealing structure 5 can be extended.

Since a position of the dust-seal main surface 52a coincides with a position of the orbiting main surface 31a, the position of the dust-seal main surface 52a does not change from an initial state S1 to an end-of-service-life state S2. Stated differently, it can also be said that the dust seal 52 is caused to move toward the orbiting main surface 31a by the amount of wear. Thus, the position of the dust-seal back surface 52b moves by the same length as the allowable wear amount SW from the initial state S1 up to the end-of-service-life state S2. The dust-seal back surface 52b is in constant contact with the backup tube 533 and receives the tube reaction force FR from the backup tube 533. Thus, an amount of movement of the dust-seal back surface 52b is the deformation amount D3s of the backup tube 533. As a result, it is understood that it suffices that the amount of deformation of the backup tube 533 is increased in order to extend the service life of the sealing structure 5.

However, considering Hooke's law (F = k × x), when the deformation amount D3s of the backup tube 533 increases, the tube reaction force FR also increases along therewith. The tube reaction force FR is related to the frictional force between the dust-seal main surface 52a and the orbiting main surface 31a. As the tube reaction force FR increases, the frictional force also increases. As a result, the amount of wear per unit time increases. In this respect, although the allowable wear amount SW is increased, the wear amount increases, so it seems that service life extension of the sealing structure 5 cannot be achieved from a comprehensive perspective.

To address the foregoing, a structure capable of increasing the allowable wear amount SW without being accompanied by an increase of the tube reaction force FR is adopted for the sealing structure 5 of the present embodiment. This structure employs the lower backup tube 531 and the upper backup tube 532 that are used as sources of the pressing force FP for pressing the dust seal 52 against the orbiting scroll 3, as illustrated in FIG. 3.

### [First Operation]

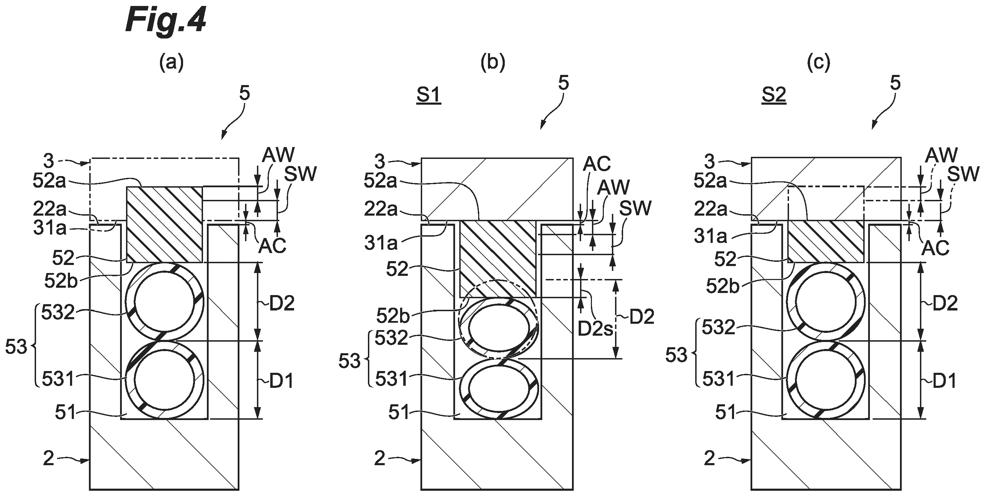

As illustrated in FIG. 4(a), the lower backup tube 531, the upper backup tube 532, and the dust seal 52 are disposed in the sealing groove 51. At this time, the allowable wear amount SW is set similarly to the above-described comparative example. A difference from the comparative example is that, in the allowable wear amount SW set in the illustrated example of the embodiment of FIG. 4(a), an additional allowable wear amount AW is further added to the allowable wear amount SW set in the illustrated comparative example of the embodiment of FIG. 6(a).

The additional allowable wear amount AW can be set by, for example, two methods. A first method is to increase the height DS of the dust seal 52. In this case, a wear allowance for the additional allowable wear amount AW is added to the initial height DS of the dust seal 52. As a result, the height of the dust seal 52 becomes "DS + AW". The second method is to decrease the groove depth GD. In this case, the groove depth GD becomes shallower than the initial groove depth GD by a length for the additional allowable wear amount AW. As a result, the depth of the sealing groove 51 becomes "GD - AW". The additional allowable wear amount AW is set by selecting at least one of the height DS of the dust seal 52 and the groove depth GD. That is, the additional allowable wear amount AW may be set by adjusting the height DS of the dust seal 52. The additional allowable wear amount AW may be set by adjusting the groove depth GD. The additional allowable wear amount AW may be set by adjusting both the height DS of the dust seal 52 and the groove depth GD.

Now, an equivalent spring constant (ks) of the backup unit 53 is expressed by Formula (3). $ks = k 1 \times k 2 / \left(k1+k2\right)$
ks: Equivalent spring constant of backup unit 53
k1: Spring constant of lower backup tube 531
k2: Spring constant of upper backup tube 532

When the spring constant (kl) of the lower backup tube 531 and the spring constant (k2) of the upper backup tube 532 are equal to each other, which is (ke), Formula (4) is obtained from Formula (3). $ks = ke \times ke / \left(ke+ke\right) = {ke}^{∧} 2 / 2 ke = \left(1/2\right) \times ke$

That is, the equivalent spring constant (ks) of the backup unit 53 is 1/2 of the spring constant (ke) of the lower backup tube 531 and 1/2 of the spring constant (ke) of the upper backup tube 532.

Next, suppose that a force having the same magnitude as the pressing force FP resulting from the backup tube 533 of the comparative example is obtained. Since the equivalent spring constant (ks) is 1/2 of the spring constant (ke), it suffices that displacement is doubled in order to obtain the same magnitude of force.

That is, use of two or more backup tubes 533 used in the comparative example appears to reduce the equivalent spring constant (ks) of the backup unit 53. As a result, it is possible to ensure a large displacement for obtaining the same pressing force FP.

The pressing force FP may be larger than a minimum pressing force set in advance (e.g., zero) and smaller than a maximum pressing force determined from the degree of wear. For example, if the pressing force FP generated in the comparative example is the maximum pressing force, the pressing force FP of an arbitrary magnitude can be selected from a numerical range not exceeding the maximum pressing force and larger than the minimum pressing force. For example, in the illustrated example of FIG. 4(a) and the like, it is also possible to set the same length as the initial allowable wear amount SW as the additional allowable wear amount AW. That is, the sum of the allowable wear amount SW and the additional allowable wear amount AW of the embodiment illustrated in FIG. 4(a) and the like is twice the allowable wear amount SW of the comparative example illustrated in FIG. 6(a) and the like. Assuming that the comparative example and the embodiment are the same under the other conditions, the time from the initial state S1 of FIG. 4(b), which is the embodiment, to the end-of-service-life state S2 of FIG. 4(c) can be derived as twice the time from the initial state S1C of FIG. 6(b), which is the comparative example, to the end-of-service-life state S2C of FIG. 6(c).

### [Second Operation]

The service life of the sealing structure 5 is the time period until the amount of wear of the dust seal 52 reaches the allowable wear amount SW. The time until the wear amount reaches the allowable wear amount SW is determined by the relation between an original degree of the allowable wear amount SW and the magnitude of the frictional force. In the foregoing description, focusing on increasing the allowable wear amount SW, the service life extension of the sealing structure 5 of the present embodiment is described. Alternatively, focusing on the magnitude of the frictional force, the service life extension of the sealing structure 5 of the present embodiment can also be described.

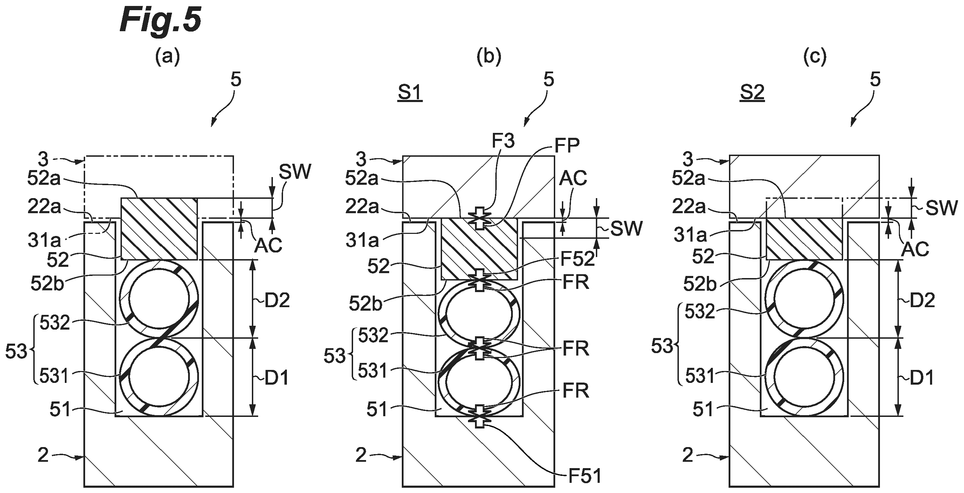

The equivalent spring constant (ks) of the backup unit 53 in the sealing structure 5 of the present embodiment is half (1/2) of the spring constant (kc) of the backup tube 533 in the sealing structure 5C of the comparative example. For example, it is assumed that the allowable wear amount SW in the sealing structure 5 of the embodiment is the same as the allowable wear amount SW in the sealing structure 5C of the comparative example (see FIG. 5(a)). In other words, it is assumed that the amount of deformation of the backup unit 53 of the embodiment is the same as the amount of deformation of the backup tube 533 of the comparative example. The equivalent spring constant (ks) of the backup unit 53 of the embodiment is 1/2 of the spring constant (kc) of the backup tube 533 of the comparative example. Thus, the tube reaction force FR generated by the backup unit 53 of the embodiment is 1/2 of the tube reaction force FR generated by the backup tube 533 of the comparative example (see FIG. 5(b)). As a result, the pressing force FP pressing the dust seal 52 against the orbiting scroll 3 is also 1/2. Since the pressing force FP is reduced, it is possible to extend the time from the initial state S1 illustrated in FIG. 5(b) to the end-of-service-life state S2 illustrated in FIG. 5(c).

### [Third Operation]

The effect of the service life extension exerted by the sealing structure 5 included in the scroll fluid machine 1 of the present embodiment can be described based on only the above-described first operation or otherwise based on only the second operation. Further, the effect of service life extension exerted by the sealing structure 5 can also be described as a combination of the first operation and the second operation. For example, it is also possible to comprehensively determine the service life of the sealing structure 5 in consideration of restrictions imposed on the allowable wear amount SW and restrictions imposed on the pressing force FP.

### [Operation and Effects]

In short, the scroll fluid machine 1 includes the fixed scroll 2 that is the one scroll provided with the fixed wrap 23 having a spiral shape, and the orbiting scroll 3 that is the other scroll having the orbiting main surface 31a on which the fixed scroll 2 is slidable and orbiting relative to the fixed scroll 2. The fixed scroll 2 includes the sealing structure 5 that is provided in the section facing the orbiting main surface 31a. The sealing structure 5 has the sealing groove 51 that is formed in the fixed main surface 21a and has the groove bottom surface 51a, the backup unit 53 that is in contact with the groove bottom surface 51a, and the dust seal 52 that is in contact with each of the backup unit 53 and the orbiting main surface 31a and is pressed against the orbiting main surface 31a by a force received from the backup unit 53. The backup unit 53 includes the lower backup tube 531 that is in contact with the groove bottom surface 51a and the upper backup tube 532 that is disposed in series with the lower backup tube 531 in the direction of the groove depth GD of the sealing groove 51 and is in contact with the dust seal 52.

In the scroll fluid machine 1, the dust seal 52 is pressed against the orbiting main surface 31a by the backup unit 53. The backup unit 53 is configured with the lower backup tube 531 and the upper backup tube 532 that are treated as different elements. The equivalent spring constant (ks) of the backup unit 53 configured with the lower backup tube 531 and the upper backup tube 532 is smaller than the spring constant (kc) of the backup unit 53 configured with one spring element. As a result, it is possible to increase the amount of deformation of the backup unit 53 required to obtain a predetermined magnitude for pressing the predetermined backup unit 53 against the orbiting main surface 31a. The amount of deformation of the backup unit 53 is related to the length of time during which the generation of the pressing force can be maintained. Thus, increasing the amount of deformation can lengthen the time during which the generation of the pressing force can be maintained. As a result, the sealing structure 5 can achieve the service life extension.

The lower backup tube 531 is a tube member having an annular-ring-shaped cross-section and having the diameter defined by the groove width of the sealing groove 51. The upper backup tube 532 is a tube member having an annular-ring-shaped cross-section and having the diameter defined by the groove width of the sealing groove 51. With this structure, the backup unit 53 can be formed by tube members having good availability.

The distance from the groove bottom surface 51a of the sealing groove 51 to the orbiting main surface 31a is smaller than the total length obtained by adding the diameter that is a natural length of the lower backup tube 531, the diameter that is a natural length of the upper backup tube 532, and the length of the dust seal 52 in the direction of the groove depth GD. With this configuration, when the fixed scroll 2 and the orbiting scroll 3 are combined, the respective diameters of the lower backup tube 531 and the upper backup tube 532 can be made smaller than the natural lengths. Thus, the lower backup tube 531 and the upper backup tube 532 are reliably deformed, so that the pressing force for pressing the dust seal 52 against the orbiting main surface 31a can be reliably generated.

The groove depth (GD) of the sealing groove 51 is defined by Formula (5) below including the diameter (D1) of the lower backup tube 531, the diameter (D2) of the upper backup tube 532, the length (ST) of the dust seal 52 in the direction of the groove depth (GD), the allowable wear amount (SW) of the dust seal 52, and a length of the gap (AC) from the fixed main surface 21a to the orbiting main surface 31a. With this configuration, the groove depth GD capable of achieving a desired amount of wear can be determined. $GD = \left(D1+D2\right) + \left(ST-SW\right) - AC$

The diameter that is the natural length of the lower backup tube 531 and the diameter that is the natural length of the upper backup tube 532 are smaller than the groove width of the sealing groove 51. With this configuration, a spring constant that is constant with respect to the degrees of deformation of the lower backup tube 531 and the upper backup tube 532 can be secured.

When the length of the gap from the fixed main surface 21a to the orbiting main surface 31a is a predetermined length (AC), the lower backup tube 531 and the upper backup tube 532 are compressed in the direction of the groove depth GD of the sealing groove 51 and deformed so as to be extended in the width direction of the sealing groove 51. The lower backup tube 531 and the upper backup tube 532 that are extended in the width direction of the sealing groove 51 are not in contact with the groove side surfaces of the sealing groove 51. With this configuration as well, a spring constant that is constant with respect to the degrees of deformation of the lower backup tube 531 and the upper backup tube 532 can be secured.

The lower backup tube 531 is separably in contact with the upper backup tube 532. With this configuration, the sealing structure 5 can be formed using readily available tubes.

The lower backup tube 531 is joined to the upper backup tube 532 so as to be inseparable from the upper backup tube 532. With this configuration, it is possible to reliably form the backup unit 53 in which the lower backup tube 531 that is the lower backup tube 531 and the upper backup tube 532 that is the upper backup tube 532 are coupled in series.

### [Modification]

The above scroll fluid machine is not limited to the above-described embodiment, and various modifications can be made without departing from the gist of the present invention.

For example, in place of Formula (2), Formula (6) below may be used to set the dimensions of the members constituting the sealing structure. Formula (6) is on the premise of using backup tubes having the same diameter. Formula (6) below can be appropriately applied to a case where two or more backup tubes having the same diameter are used. $GD = DS \times N + \left(ST-SW\right) - AC$
GD: Groove depth
DS: Diameter of backup tube
N: Number of backup tubes
DS: Height of dust seal
SW: Allowable wear amount
AC: Set gap

In the above embodiment, the sealing structure 5 is provided in the section of the fixed scroll 2 facing the orbiting main surface 31a; however, this is not intended to be limiting. The sealing structure 5 may be provided in a section of the orbiting scroll 3 facing the fixed-side peripheral-wall main surface 22a.

In the above embodiment, the backup unit 53 that is the elastic member is in direct contact with the groove bottom surface 51a. In addition, the dust seal 52 that is the sealing member is in contact with each of the backup unit 53 that is the elastic member and the orbiting main surface 31a that is the other-side main surface. Further, the lower backup tube 531 that is the first spring element is in contact with the groove bottom surface 51a, and the upper backup tube 532 that is the second spring element is in contact with the dust seal 52 that is the sealing member. The term "be in contact" here means that these members are in direct contact with each other. For example, the members may not be in direct contact with each other, and some members may be sandwiched between the respective members. For example, a plate-shaped member may be disposed between the backup unit 53 that is the elastic member and the groove bottom surface 51a. In addition, a plate-shaped member may be disposed between the dust seal 52 that is the sealing member and the backup unit 53 that is the elastic member, and a plate-shaped member may be disposed between the dust seal 52 that is the sealing member and the orbiting main surface 31a that is the other-side main surface.

### <Appendix>

The present disclosure also includes the following configurations.

The present disclosure is "a scroll fluid machine including one scroll provided with a wrap that has a spiral shape, and an other scroll having an other-side main surface on which the one scroll is slidable and configured to orbit relative to the one scroll. The one scroll includes a sealing structure that is provided in a section facing the other-side main surface. The sealing structure has a sealing groove that is formed in a section facing the other-side main surface and has a groove bottom surface, an elastic member that is in contact with the groove bottom surface, and a sealing member that is in contact with each of the elastic member and the other-side main surface and is pressed against the other-side main surface by a force received from the elastic member. The elastic member includes a first spring element that is in contact with the groove bottom surface and a second spring element that is disposed in series with the first spring element in a direction of a groove depth of the sealing groove and is in contact with the sealing member".

### Reference Signs List

- 1, 1C: scroll fluid machine
- 2: fixed scroll
- 3: orbiting scroll
- 5, 5C: sealing structure
- 21a: fixed main surface
- 23: fixed wrap
- 31a: orbiting main surface
- 51: sealing groove
- 51a: groove bottom surface
- 52: dust seal (sealing member)
- 53: backup unit (elastic member)

## Claims

1. A scroll fluid machine comprising:
one scroll provided with a wrap that has a spiral shape; and
an other scroll having an other-side main surface on which the one scroll is slidable and configured to orbit relative to the one scroll,
wherein the one scroll includes a sealing structure that is provided in a section facing the other-side main surface,
wherein the sealing structure includes:
a sealing groove that is formed in the section facing the other-side main surface and has a groove bottom surface;
an elastic member that is disposed on a side of the groove bottom surface; and
a sealing member that is disposed between the elastic member and the other-side main surface and is pressed against the other-side main surface by a force received from the elastic member, and
wherein the elastic member includes a first spring element that is disposed on the side of the groove bottom surface and a second spring element that is disposed in series with the first spring element in a direction of a groove depth of the sealing groove and is disposed on a side of the sealing member.

2. The scroll fluid machine according to claim 1,
wherein the first spring element is a first tube having an annular-ring-shaped cross-section and having a diameter defined by a groove width of the sealing groove, and
wherein the second spring element is a second tube having an annular-ring-shaped cross-section and having a diameter defined by the groove width of the sealing groove.

3. The scroll fluid machine according to claim 2, wherein a distance from the groove bottom surface of the sealing groove to the other-side main surface is smaller than a total length obtained by adding the diameter that is a natural length of the first tube, the diameter that is a natural length of the second tube, and a length of the sealing member in the direction of the groove depth.

4. The scroll fluid machine according to claim 2, wherein the groove depth (GD) of the sealing groove is defined by Formula (1) below: $GD = \left(D1+D2\right) + \left(ST-SW\right) - AC$ Formula (1) including the diameter (D1) of the first tube, the diameter (D2) of the second tube, a length (ST) of the sealing member in the direction of the groove depth, an allowable wear amount (SW) of the sealing member, and a length of a gap (AC) from the section facing the other-side main surface to the other-side main surface.

5. The scroll fluid machine according to claim 2, wherein the diameter that is a natural length of the first tube and the diameter that is a natural length of the second tube are smaller than the groove width of the sealing groove.

6. The scroll fluid machine according to claim 2,
wherein, when a length of a gap from the section facing the other-side main surface to the other-side main surface is a predetermined length (AC), the first tube and the second tube are compressed in the direction of the groove depth of the sealing groove and deformed so as to be extended in a width direction of the sealing groove, and
wherein the first tube and the second tube that are extended in the width direction of the sealing groove are not in contact with groove side surfaces of the sealing groove.

7. The scroll fluid machine according to claim 2, wherein the first tube is separably in contact with the second tube.

8. The scroll fluid machine according to claim 2, wherein the first tube is joined to the second tube so as to be inseparable from the second tube.

9. The scroll fluid machine according to claim 1, wherein the elastic member is in direct contact with the groove bottom surface.

10. The scroll fluid machine according to claim 1, wherein the sealing member is in direct contact with the elastic member and is also in direct contact with the other-side main surface.

11. The scroll fluid machine according to claim 1, wherein the first spring element is in direct contact with the groove bottom surface.

12. The scroll fluid machine according to claim 1, wherein the second spring element is in direct contact with the sealing member.
